# EUROPÄISCHE PATENTSCHRIFT

(11) **EP 2 350 152 B1**
(45) Veröffentlichungstag und Bekanntmachung des Hinweises auf die Patenterteilung: **18.12.2013**
(21) Anmeldenummer: 09764473.6
(22) Anmeldetag: 06.10.2009
(51) Int. Cl.: C08F 293/00, C09D 153/00, C09J 153/00, C09K 3/10

(54) **VERFAHREN ZUR HERSTELLUNG VON AB-DIBLOCKCOPOLYMEREN MIT EINEM BIMODALEN VERTEILTEN A-BLOCK**
PROCESS FOR PREPARING AB DIBLOCK COPOLYMERS WITH A BIMODALLY DISTRIBUTED A BLOCK
PROCÉDÉ DE FABRICATION DE COPOLYMÈRES DIBLOCS AB AVEC UN BLOC A À DISTRIBUTION BIMODALE

(30) Priorität: 12.11.2008 DE 102008043666
(43) Veröffentlichungstag der Anmeldung: 03.08.2011
(73) Patentinhaber: Evonik Röhm GmbH, 64293 Darmstadt (DE); Henkel AG & Co. KGaA, 40191 Düsseldorf (DE)
(72) Erfinder: KAUTZ, Holger, 45721 Haltern am See / Sythen (DE); BALK, Sven, 60594 Frankfurt (DE); FENGLER, Stephan, 60488 Frankfurt (DE); STASCHIK, Dorothea, 61130 Nidderau (DE); MIESS, Christine, 63796 Kahl (DE); ZANDER, Lars, 41569 Rommerskirchen (DE); LÜCKERT, Jens, 30890 Barsinghausen (DE); KLEIN, Johann, 40593 Düsseldorf (DE); MÖLLER, Thomas, 40593 Düsseldorf (DE); ERB, Volker, 40595 Düsseldorf (DE)
(86) Internationale Anmeldenummer: PCT/EP2009/062930
(87) Internationale Veröffentlichungsnummer: WO 2010/054895

(56) Entgegenhaltungen:
- US-A1- 2006 024 521
- ZHANG Z-B ET AL: "Synthesis of fluorine-containing block copolymers via ATRP 2. Synthesis and characterization of semifluorinated di- and triblock copolymers" POLYMER, ELSEVIER SCIENCE PUBLISHERS B.V, GB, Bd. 40, Nr. 19, 1. September 1999 (1999-09-01), Seiten 5439-5444, XP004167784 ISSN: 0032-3861

## Beschreibung

Die Erfindung betrifft ein kontrolliertes Polymerisationsverfahren zur Herstellung von AB-Diblockcopolymeren auf (Meth)acrylatbasis mit einem B-Block, der eine enge, monomodale Molekulargewichtsverteilung aufweist, und einem A-Block der eine breite, bimodale Molekulargewichtsverteilung aufweist, sowie deren Verwendung zum Beispiel als Bindemittel in Klebstoffen oder Dichtmassen.

Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden.

Polymere können beispielsweise über ionische Polymerisationsverfahren oder durch Polykondensation bzw. -addition hergestellt werden. In diesen Verfahren ist die Darstellung endgruppenfunktionalisierter Produkte unproblematisch. Dabei ist jedoch ein gezielter Molekulargewichtsaufbau problematisch.

Polymere, die durch einen freiradikalischen Polymerisationsprozess gewonnen werden, zeigen Molekularitätsindizes von deutlich über 1,8. Es liegen bei einer solchen Molekulargewichtsverteilung also zwangsläufig sehr kurzkettige sowie langekettige Polymere im Gesamtprodukt vor. Die kurzkettigen Polymerketten zeigen in Schmelze oder Lösung eine verringerte Viskosität und in einer Polymermatrix eine erhöhte Mobilität gegenüber langkettigen Bestandteilen. Dies führt zum einen zu einer verbesserten Verarbeitbarkeit solcher Polymere und zum anderen zu einer gesteigerten Verfügbarkeit von polymergebundenen funktionellen Gruppen in einer Polymermasse oder Beschichtung.

Langkettige Nebenprodukte führen dagegen zu einer überproportionalen Viskositätszunahme der Polymerschmelze bzw. -lösung. Auch ist die Migration solcher Polymere in einer Matrix deutlich vermindert.

Nachteil von freiradikalisch hergestellten Bindemitteln dieser Art ist jedoch eine statistische Verteilung von funktionellen Gruppen in der Polymerkette. Außerdem ist über eine freiradikalische Polymerisationsmethode weder eine hart-weich-hart Triblockarchitektur noch die gezielte Synthese einzelner Polymerblöcke mit engen Molekulargewichtsverteilungen möglich.

Blockpolymere haben einen sprunghaften Übergang zwischen den Monomeren in der Polymerkette, der als Grenze zwischen den einzelnen Blöcken definiert ist. Ein übliches Syntheseverfahren für AB-Blockpolymere ist die kontrollierte Polymerisation von Monomer A und zu einem späteren Zeitpunkt die Zugabe von Monomer B. Neben der sequentiellen Polymerisation durch chargenweise Zugabe in das Reaktionsgefäß kann ein ähnliches Ergebnis auch dadurch erzielt werden, dass man bei einer kontinuierlichen Zugabe der beiden Monomere deren Zusammensetzungen zu bestimmten Zeitpunkten sprunghaft ändert.

Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation.

Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ = 10.000-120.000 g/mol. Ein besonderer Vorteil dabei ist, dass das Molekulargewicht regelbar ist. Als lebende Polymerisation gestattet sie ferner den gezielten Aufbau von Polymerarchitekturen wie beispielsweise statistische Copolymere oder auch Block-Copolymer-Strukturen. Kontrolliert radikalische Methoden eignen sich insbesondere auch zur gezielten Funktionalisierung von Vinylpolymeren. Insbesondere von Interesse sind Funktionalisierungen an den Kettenenden (so genannte Telechele) bzw. in der Nähe der Kettenenden. Im Gegensatz dazu ist die gezielte Funktionalisierung am Kettenende bei der radikalischen Polymerisation nahezu unmöglich.

Bindemittel mit definiertem Polymerdesign können durch eine kontrollierte Polymerisationsmethode, z.B. in Form der atom transfer radical polymerisation, zur Verfügung gestellt werden. So sind ABA Triblockcopolymere beschrieben, die über einen unfunktionalisierten B-Block und funktionalisierte A-Außenblöcke verfügen. IN EP 1 475 397 sind solche Polymere mit OH-Gruppen, in WO 2007/033887 mit olefinischen, in WO 2008/012116 mit Amin- und in der noch nicht veröffentlichten DE 102008002016 mit Silylgruppen beschrieben. Alle in diesen Schriften beschriebenen Polymere weisen jedoch eine explizit enge Molekulargewichtsverteilung auf.

Über die so genannte kontrollierte Polymerisationsverfahren sind keine Verfahren beschrieben, mit denen es möglich wäre, Polymere herzustellen, die einzelne oder mehrere Blöcke mit gezielt breiter Molekulargewichtsverteilung aufweisen.

Eine bereits etablierte Methode ist die Endgruppenfunktionalisierung eines Poly(meth)acrylats mit olefinischen Gruppen und die anschließende Hydrosilylierung dieser Gruppen. Solche Verfahren finden sich unter anderem in EP 1 024 153, EP 1 085 027 und EP 1 153 942. Dabei handelt es sich jedoch nicht um Blockcopolymere und es wird explizit auf eine Molekulargewichtsverteilung des Produktes kleiner 1,6 hingewiesen. Ein weiterer Nachteil dieser Produkte gegenüber Polymeren mit mehrfach funktionalisierten Außenblöcken ist die höhere Wahrscheinlichkeit, einseitig nicht funktionalisierte Produkte zu erhalten. Durch den gegenüber den erfindungsgemäßen Polymeren jeweils resultierenden geringeren Funktionalisierungsgrad erhält man für weitere Folgereaktionen wie zum Beispiel im Aushärtprozess von Dichtmassenformulierungen einen niedrigeren Vernetzungsgrad, der der mechanischen Stabilität und chemischen Beständigkeit entgegenwirkt.

Neben Telechelen und Blockstrukturen stellen auch ATRP-synthesisierte - z.B. silyl-haltige - (Meth)acrylatcopolymere mit einer statistischen Verteilung und einer engen Molekulargewichtsverteilung eine Alternative dar. Nachteil solcher Bindemittel ist eine engmaschige Vernetzung. Auch haben solche Bindemittelsysteme aufgrund der engen Molekulargewichtsverteilung weder die Vorteile besonders langer, noch besonders kurzer in System enthaltener Polymerketten.

Neben der ATRP kommen zur Synthese funktionalisierter Polymerarchitetkuren auch andere Methoden zum Einsatz. Eine weitere relevante Methode soll im Folgenden kurz beschrieben werden. Dabei wird eine Abgrenzung von der vorliegenden Erfindung bezüglich der Produkte und auch der Methodik erfolgen. Insbesondere die Vorteile der ATRP gegenüber anderen Verfahren werden dabei herausgestellt:
Bei der anionischen Polymerisation können Bimodalitäten auftreten. Diese Polymersiationsverfahren können aber nur bestimmte Funktionalisierungen erzeugen. Für die ATRP sind bimodale Verteilungen für Systeme beschrieben. Die Bimodalität dieser Polymere ergibt sich jedoch jeweils aus dem Vorliegen von Blockcopolymeren einerseits und nicht umgesetzten Makroinitiatoren andererseits. Nachteil dieser Verfahren ist es, dass das Produkt aus einer Mischung zweier unterschiedlicher Polymerzusammensetzungen besteht.

### Aufgabe

Eine neue Stufe der Entwicklung sind die im Folgenden beschriebenen Diblockcopolymere.

Aufgabe war es, ein Verfahren zur Synthese von Diblockpolymeren der Struktur AB aus Poly(meth)acrylaten, bevorzugt funktionalisierten Poly(meth)acrylaten zur Verfügung zu stellen. Dabei sollen diese aus B-Blöcken mit in sich enger Molekulargewichtsverteilung und einem Polydispersitätsindex von weniger als 1,6 und A-Blöcken, die eine bimodale Molekulargewichtsverteilung mit zum einen langen Polymerketten und zum anderen besonders kurzen Polymerketten aufweisen, zusammengesetzt sein. Insbesondere besteht der Bedarf an AB-Diblockpolymeren, deren A-Blöcke mit bimodaler Molekulargewichtsverteilung einen Polydispersitätsindex von mindestens 1,8 aufweisen und AB-Diblockpolymeren diese A-Blöcke enthaltend, die insgesamt einen Polydispersitätsindex von mindestens 1,8 aufweisen.

Eine weitere Aufgabe bestand darin, AB-Diblockcopolymere dergestalt zur Verfügung zu stellen, dass diese Polymere nur in den A-Blöcken oder nur in den B-Blöcken oder in beiden Blöcken unterschiedliche oder in beiden Blöcken identische funktionelle Gruppen aufweisen. Insbesondere ist Gegenstand dieser Erfindung ein Verfahren zur gezielten Funktionalisierung eines oder beider Blöcke durch den Einbau geeigneter ungesättigter Monomere, die eine zusätzliche funktionelle Gruppe aufweisen, während der jeweiligen Stufe einer sequentiellen Polymerisation.

Aufgabe der vorliegenden Erfindung ist es daher unter anderem auch ein Bindemittel für Klebmassen bzw. Dichtmassen zur Verfügung zu stellen, das eine Blockstruktur aufweist, gezielt nur in einem der Blöcke funktionalisiert ist und kurze, viskositätserniedrigende und gleichzeitig lange, die Adhäsion verbessernde Ketten enthält.

### Lösung

Die Aufgabe wurde gelöst durch das zur Verfügung Stellen eines neuen Polymerisationsverfahrens, das auf der atom transfer radical polymerization (ATRP) und einer zeitlich getrennten, mindestens zweimaligen Initiierung basiert.

Es wird ein Verfahren zur Herstellung von Blockcopolymeren bereitgestellt, dadurch gekennzeichnet, dass es sich um eine sequentiell durchgeführte atom transfer radical polymerization (ATRP) handelt, bei der ein monofunktioneller Initiator zur Polymerisationslösung zugegeben wird, und dass das Blockcopolymer insgesamt und auch der Blocktyp A eine Molekulargewichtsverteilung mit einem Polydispersitätsindex größer 1,8 aufweist. Dabei wird das Polymer mit einer bimodalen Molekulargewichtsverteilung durch ein Verfahren mit einer zweimaligen Initiierung hergestellt.

Die Blockcopolymere werden mittels eines sequentiellen Polymerisationsverfahrens hergestellt. Das heißt, dass die Monomermischung zur Synthese des Blockes beispielsweise B erst nach einer Polymerisationszeit t₂ zu dem System gegeben wird, wenn die Monomermischung zur Synthese des Blocks beispielsweise A zu mindestens 90%, bevorzugt zu mindestens 95% umgesetzt worden ist. Durch dieses Verfahren wird gewährleistet, dass die A Blöcke frei von Monomeren der Zusammensetzung B sind, und dass die B Blöcke weniger als 10%, bevorzugt weniger als 5% der Gesamtmenge der Monomere der Zusammensetzung A enthalten. Die Blockgrenzen befinden sich nach dieser Definition an der jeweiligen Stelle der Kette, an der sich die erste Wiederholungseinheit der zugegebenen Monomermischung - in diesem Beispiel der Mischung B - befindet. Ein nur 95%iger Umsatz hat den Vorteil, dass die verbleibenden Monomere, vor allem im Falle von Acrylaten, einen effizienteren Übergang zur Polymerisation einer zweiten Monomerzusammensetzung, vor allem von Methacrylaten, ermöglichen. Auf diese Weise wird die Ausbeute von Blockcopolymeren deutlich verbessert.

Im erfindungsgemäßen Verfahren wird der Initiator zur Polymerisation der Monomermischung A zeitversetzt in mindestens zwei Chargen zur Polymerlösung gegeben. Mit der ersten Charge wird die Polymerisation gestartet und durch eine insgesamt längere Polymerisationszeit werden Polymerketten mit relativ hohem Molekulargewicht gebildet. Nach einer Zeit t₁, die je nach angestrebten Molekulargewicht variieren kann, mindestens jedoch 30 min, bevorzugt mindestens 60 min beträgt, wird die zweite Monomercharge zugegeben. Durch diese zweite Initiierung werden zunächst Polymere der Zusammensetzung A mit relativ niedrigem Molekulargewicht gebildet. Dabei macht die erste Initiatorcharge 10% bis 90%, bevorzugt 25% bis 75% der gesamten Initiatormenge aus. Alternativ ist auch ein Verfahren möglich, bei dem der Initiator in mehr als zwei Chargen zugegeben wird. Auf diese Weise werden Makroinitiatoren der Zusammensetzung A für den sequentiellen Aufbau von Blockcopolymeren der Zusammensetzung AB gebildet. Diese Makroinitiatoren weisen in sich eine Molekulargewichtsverteilung mit einem Polydispersitätsindex größer 1,8, bevorzugt zwischen 1,8 und 3,0 und besonders bevorzugt zwischen 1,9 und 2,5 auf.

Nach der Polymerisationszeit t₂ wird schließlich die Monomermischung B zugegeben. Die Polymerisationszeit t₂ beträgt mindestens weitere 60 min, bevorzugt mindestens 90 min. Durch den Charakter der ATRP stehen zu diesem Zeitpunkt beide vorher initiierten Polymerspezies der Zusammensetzung A zur Polymerisation zur Verfügung und die Polymerblöcke B werden unter den bereits bekannten Voraussetzungen der ATRP aufgebaut. Diese Segmente der Polymerketten zeigen entsprechend in sich eine enge Molekulargewichtsverteilung kleiner 1,6.

Durch geeignete Wahl der Dosierzeit t₁ und der anschließenden Polymerisationszeit t₂ können das minimale Molekulargewicht und die Breite bzw. die Bimodalität der Molekulargewichtsverteilung der A-Blöcke gezielt eingestellt werden.

Unter einer bimodalen Molekulargewichtsverteilung eines Polymers oder einer Mischung aus Polymeren versteht man erfindungsgemäß eine Gesamtmolekulargewichtsverteilung, die sich aus zwei verschiedenen einzelnen Molekulargewichtsverteilungen mit unterschiedlichen mittleren Molekulargewichten Mn und Mw zusammensetzt. Dabei können die beiden Molekulargewichtsverteilungen vollständig voneinander getrennt sein, sich insofern überlappen, dass sie zwei unterscheidbare Maxima aufweisen oder soweit überlappen, dass es zu einer Schulterbildung in der Gesamtmolekulargewichtsverteilung kommt. Die Gesamtmolekulargewichtsverteilung wird mittels Gelpermeationschromatographie bestimmt.

Auf diese Weise werden Makroinitiatoren der Zusammensetzung A für den sequentielllen Aufbau von Blockcopolymeren der Zusammensetzung AB gebildet. Diese Makroinitiatoren weisen in sich eine Molekulargewichtsverteilung mit einem Polydispersitätsindex zwischen 1,8 und 3,0, bevorzugt zwischen 1,9 und 2,5 auf. Nach der Polymerisationszeit t₂ wird schließlich die Monomermischung B zugegeben. Die Polymerisationszeit t₂ beträgt mindestens weitere 60 min, bevorzugt mindestens 90 min. Durch den Charakter der ATRP stehen zu diesem Zeitpunkt beide vorher initiierten Polymerspezies der Zusammensetzung A zur Polymerisation zur Verfügung und die Polymerblöcke B werden unter den bereits bekannten Voraussetzungen der ATRP aufgebaut. Diese Segmente der Polymerketten zeigen entsprechend in sich eine enge Molekulargewichtsverteilung.

Ein weiterer Vorteil der vorliegenden Erfindung ist die weiterhin verhinderte Rekombination. So kann auch mit diesem Verfahren die Bildung von besonders hohen Molekulargewichten unterdrückt werden. Solche Polymerbestandteile würden überproportional zu einer Steigerung der Lösungs- bzw. Schmelzviskosität beitragen. Vielmehr weist das erfindungsgemäß hergestellte breit verteilte, monomodale Polymer eine neuartige Polymerverteilung auf. Durch die Vorlage eines Teils des Initiators zur Primärinitiierung werden die Ketten gebildet, die der längsten Polymerisationszeit unterliegen und damit im Endprodukt das höchste Molekulargewicht aufweisen. Somit erhält man ein Polymer, dass zu hohen Molekulargewichten weiterhin die Charakteristika eines mittels kontrollierter Polymerisation hergestellten Polymers aufweist. Die Verteilung zeigt zu niedrigen Molekulargewichten jedoch eine starke Verbreiterung der Molekulargewichtsverteilung, die der eines Produktes, das mittels konventioneller freier radikalischer Polymerisation hergestellt wurde, ähnelt oder sogar breiter ist. Die gesamte Molekulargewichtsverteilung der erfindungsgemäß hergestellten Polymere hat einen Polydispersitätsindex größer 1,8.

Erfindungsgemäß wird als Maß für die Uneinheitlichkeit der Molekulargewichtsverteilung der Polydispersitätsindex als Quotient aus dem Gewichts- und dem Zahlenmittel der Molekulargewichte angegeben. Die Molekulargewichte werden mittels Gelpermeationschromatographie (GPC) gegen einen PMMA-Standard bestimmt.

Eine weitere Ausführungsform der vorliegenden Erfindung ist die gezielte Funktionalisierung der A- und/oder der B-Blöcke in AB-Blockcopolymeren mit bimodaler Molekulargewichstverteilung. Gelöst wurde die Aufgabe durch die Herstellung von Blockcopolymeren mit mindestens 1 und maximal 4 funktionellen Gruppen in den einzelnen A- und/oder B-Blöcken, dadurch, dass Monomermischung A und/oder Monomermischung B aus einer Zusammensetzung enthaltend funktionalisierte (Meth)acrylate und Monomere ausgewählt aus der Gruppe der (Meth)acrylate oder deren Mischungen, die keine zusätzliche funktionelle Gruppe aufweisen, besteht. Dabei können AB-Diblockcopolymere mit funktionellen Gruppen hergestellt werden, die entweder nur in den A-Blöcken oder nur in den B-Blöcken oder in beiden Blöcken unterschiedliche oder in beiden Blöcken identische funktionelle Gruppen aufweisen.

Es wurde insbesondere gefunden, dass auch erfindungsgemäße Blockcopolymere mit mindestens 1 und maximal 2 funktionellen Gruppen in einem einzelnen Block A und/oder B dargestellt werden können.

Die besagten funktionellen Gruppen, die in einem der Blöcke enthalten sind, sind nur durch die Auswahl mittels ATRP copolymerisierbarer Monomere eingeschränkt. Die folgende Auflistung dient nur als Beispiel zur Verdeutlichung der Erfindung.

So können die A- und/oder B-Blöcke OH-Gruppen aufweisen. Hydroxyfunktionalisierte (Meth)acrylate, die dazu geeignet sind, sind bevorzugt Hydroxyalkyl(meth)acrylate von gradkettigen, verzweigten oder cycloaliphatischen Diolen mit 2-36 C-Atomen, wie beispielsweise 3-Hydroxypropyl(meth)acrylat, 3,4-Dihydroxybutylmono(meth)acrylat, 2-Hydroxyethyl(meth)acrylat, 4-Hydroxybutyl(meth)acrylat, 2-Hydroxypropyl(meth)acrylat, 2,5-Dimethyl-1,6-hexandiolmono(meth)acrylat, besonders bevorzugt 2-Hydroxyethylmethacrylat.

Amingruppen sind beispielsweise durch die Copolymerisation von 2-Dimethylaminoethyl-methacrylat (DMAEMA), 2-Diethylaminoethyl-methacrylat (DEAEMA), 2-*tert*-butylaminoethyl-methacrylat (t-BAEMA), 2-Dimethylaminoethylacrylat (DMAEA), 2-Diethylaminoethyl-acrylat (DEAEA), 2-*tert*-butylaminoethyl-acrylat (t-BAEA), 3-Dimethylaminopropyl-methacrylamid (DMAPMA) und 3-Dimethylaminopropyl-acrylamid (DMAPA) darstellbar.

Polymere mit Allylgruppen können zum Beispiel durch die Copolymerisation von Allyl(meth)acrylat realisiert werden. Polymere mit Epoxygruppen durch die Copolymerisation von Glycidyl(meth)acrylat. Säuregruppen können durch die Copolymerisation von tert-Butyl(meth)acrylat und anschließende Verseifung bzw. thermische Abspaltung von Isobuten realisiert werden.

Beispiele für (Meth)Acrylat gebundene Silylreste seien -SiCl₃, -SiMeCl₂, -SiMe₂Cl, - Si(OMe)₃, -SiMe(OMe)₂, -SiMe₂(OMe), -Si(OPh)₃, -SiMe(OPh)₂, -SiMe₂(OPh), -Si(OEt)₃, -SiMe(OEt)₂, -SiMe₂(OEt), -Si(OPr)₃, -SiMe(OPr)₂, -SiMe₂(OPr), -SiEt(OMe)₂, - SiEtMe(OMe), -SiEt₂(OMe), -SiPh(OMe)₂, -SiPhMe(OMe), -SiPh₂(OMe), - SiMe(OC(O)Me)₂, -SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen. Ein kommerziell verfügbares Monomer ist zum Beispiel Dynasylan^{®} MEMO der Firma Evonik-Degussa GmbH. Dabei handelt es sich um 3-Methacryloxypropyltrimethoxysilan.

Vorteilhaft ist, dass die zur Funktionalisierung eingesetzten Monomere polymerisiert werden, ohne dass es zu Vernetzungsreaktionen kommt.

Die Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden. Monomere ohne weitere Funktionalität, die sowohl in Block A als auch in Block B polymerisiert werden, sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethem, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether, Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Es können sowohl den Copolymeren des Blockes A, als auch den Copolymeren des Blockes B 0-50 Gew.-% mittels ATRP polymerisierbare Monomere, die nicht zu der Gruppe der (Meth)acrylate gezählt werden, zugegeben werden.

Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan; Biodiesel; aber auch Weichmacher wie niedrigmolekulare Polypropylenglycole oder Phthalate.

Die Blockcopolymere der Zusammensetzung AB werden mittels sequentieller Polymerisation dargestellt.

Neben der Lösungspolymerisation kann die ATRP auch als Emulsions-, Miniemulsions-, Mikroemulsions-, Suspension- oder Substanzpolymerisation durchgeführt werden. Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weist das erfindungsgemäße Polymer ein zahlenmittleres Molekulargewicht zwischen 5000 g/mol und 100000 g/mol, besonders bevorzugt zwischen 7500 g/mol und 50000 g/mol auf.

Als monofunktioneller Initiator kann jede Verbindung eingesetzt werden, die ein Atom bzw. eine Atomgruppen aufweist, welche unter den Polymerisationsbedingungen des ATRP-Verfahrens radikalisch übertragbar ist. Geeignete Initiatoren umfassen verallgemeinert folgende Formeln:
R¹R²R³C-X, R¹C(=O)-X, R¹R²R³Si-X, R¹R²N-X und (R¹)(R²O)P(O)ₘ-X, wobei X ausgewählt ist aus der Gruppe bestehend aus Cl, Br, I, OR⁴, SR⁴, SeR⁴, OC(=O)R⁴, OP(=O)R⁴, OP(=O)(OR⁴)₂, OP(=O)OR⁴, O-N(R⁴)₂, CN, NC, SCN, NCS, OCN, CNO und N₃ darstellen (wobei R⁴ eine Alkylgruppe von 1 bis 20 Kohlenstoffatomen, wobei jedes Wasserstoffatom unabhängig durch ein Halogenatom, vorzugsweise Fluorid oder Chlorid ersetzt sein kann oder Alkenyl von 2 bis 20 Kohlenstoffatomen, vorzugsweise Vinyl, Alkenyl von 2 bis 10 Kolenstoffatomen, vorzugsweise Acetylenyl, Phenyl, welches mit 1 bis 5 Halogenatomen oder Alkylgruppen mit 1 bis 4 Kohlenstoffatomen substituiert sein kann, oder Aralkyl bedeutet und wobei R¹, R² und R³ unabhängig voneinander ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, Silylgruppen, Alkylsilylgruppen, Alkoxysilylgruppen, Amingruppen, Amidgruppen, COCI, OH, CN, Alkenyl- oder Alkinylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkenyl- oder Alkenylgruppen mit 2 bis 6 Kohlenstoffatomen, welche mit Oxiranyl oder Glycidyl, Aryl, Heterocyclyl, Aralkyl, Aralkenyl (arylsubstituiertes Alkenyl, wobei Aryl wie zuvor definiert ist und Alkenyl Vinyl ist, welches mit ein oder zwei C₁ bis C₆ Alkylgruppen, in welchen ein bis alles der Wasserstoffatome, vorzugsweise eines durch Halogen substituiert sind (vorzugsweise Fluor oder Chlor, wenn ein oder mehr Wasserstoffatome ersetzt sind, und vorzugsweise Fluor, Brom oder Brom, falls ein Wasserstoffatom ersetzt ist) Alkenylgruppen mit 1 bis 6 Kohlenstoffatomen, die mit 1 bis 3 Substituenten (vorzugsweise 1) ausgewählt aus der Gruppe bestehend aus C₁ bis C₄ Alkoxy, Aryl, Heterocyclyl, Ketyl, Acetyl, Amin, Amid, Oxiranyl und Glycidyl substituiert sind und m=0 oder 1; m=0, 1 oder 2 darstellt. Vorzugsweise sind nicht mehr als zwei der Reste R¹, R² und R³ Wasserstoff, besonders bevorzugt ist maximal einer der Reste R¹, R² und R³ Wasserstoff.

Zu den besonders bevorzugten Initiatoren gehören Benzylhalogenide, wie p-Chlormethylstyrol, Hexakis(α-brommethyl)benzol, Benzylchlorid, Benzylbromid, 1-Brom-i-phenylethan und 1-Chlor-i-phenylethan. Weiterhin besonders bevorzugt sind Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat oder Ethyl-2-bromisobutyrat. Bevorzugt sind auch Tosylhalogenide, wie p-Toluolsulfonylchlorid; Alkylhalogenide, wie 1-Vinylethylchlorid oder 1-Vinylethylbromid; und Halogenderivate von Phosphorsäureestern, wie Demethylphosphonsäurechlorid.

Katalysatoren für die ATRP sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, CuI, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu Initiator liegt im Allgemeinen im Bereich von 0,02:1 bis 20:1, vorzugsweise im Bereich von 0,02:1 bis 6:1 und besonders bevorzugt im bereich von 0,2:1 bis 4:1, ohne dass hierdurch eine Beschränkung erfolgen soll. Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll. Nach erfolgter ATRP kann die Übergangsmetallverbindung mittels Zugabe einer geeigneten Schwefelverbindung gefällt werden. Mittels Zugabe z.B. von Mercaptanen wird das kettenendständige Halogenatom unter Freisetzung eines Halogenwasserstoffs substituiert. Der Halogenwasserstoff - wie z.B. HBr - protoniert den am Übergangsmetall koordinierten Liganden L zu einem Ammoniumhalogenid. Durch diesen Vorgang wird der Übergangsmetall-Ligand Komplex gequencht und das "nackte" Metall ausgefällt. Anschließend lässt sich die Polymerlösung leicht durch eine einfache Filtration reinigen. Bei besagten Schwefelverbindungen handelt es sich bevorzugt um Verbindungen mit einer SH-Gruppe. Ganz besonders bevorzugt handelt es sich um einen aus der freiradikalischen Polymerisation bekannten Regler wie Ethylhexylmercaptan oder n-Dodecylmercaptan.

Es ergibt sich ein breites Anwendungsfeld für diese Produkte. Die Auswahl der Anwendungsbeispiele ist nicht dazu geeignet, die Verwendung der erfindungsgemäßen Polymere einzuschränken. Bevorzugt können Diblockcopolymere der Zusammensetzung AB mit reaktiven Gruppen, als Präpolymere für eine feuchtigkeitshärtende Vernetzung verwendet werden. Diese Präpolymere können mit beliebigen Polymeren vernetzt werden.

Die bevorzugten Anwendungen für die erfindungsgemäßen Diblockcopolymeren der Zusammensetzung AB mit weniger als vier funktionellen Gruppen in den einzelnen A-Blöcken sind in Dichtmassen, Reaktivschmelzklebstoffen oder in Klebmassen zu finden. Insbesondere bieten sich Verwendungen in Dichtmassen für Anwendungen in den Bereichen Fahrzeug-, Schiffs-, Container-, Maschinen- und Flugzeugbau, sowie in der Elektroindustrie und beim Bau von Haushaltsgeräten an. Weitere bevorzugte Anwendungsgebiete sind Dichtmassen für Bauanwendungen, Heißsiegelanwendungen oder Montagekleber.

Die möglichen Anwendungen für erfindungsgemäß hergestellte Materialien umfassen jedoch nicht nur Bindemittel für Dichtungsmassen oder als Zwischenstufe für die Einführung andersartiger Funktionalitäten. In EP 1 510 550 ist beispielsweise eine Beschichtungszusammensetzung beschrieben, die unter anderem aus Acrylatpartikeln und Polyurethanen besteht. Ein erfindungsgemäßes Polymer führte in einer entsprechenden Formulierung zu einer Verbesserung der Verarbeitungs- und Vernetzungseigenschaften. Denkbare Anwendungen sind zum Beispiel Pulverlackformulierungen.

Mit den neuen Bindemitteln lassen sich vernetzbare einkomponentige und zweikomponentige Elastomere zum Beispiel für eine der aufgeführten Anwendungen herstellen. Übliche weitere Bestandteile einer Formulierung sind das Bindemittel, Lösungsmittel, Füllstoffe, Pigmente, Weichmacher, Stabilisierungsadditive, Wasserfänger, Haftvermittler, Thixotropiermittel, Vernetzungskatalysatoren, Klebrigmacher (Tackifier), usw.

Zur Reduktion der Viskosität können Lösungsmittel eingesetzt werden, z. B. aromatische Kohlenwasserstoffe wie Toluol, Xylol, usw., Ester wie Ethylacetat, Butylacetat, Amylacetat, Cellosolveacetat, usw., Ketone wie Methylethylketon, Methylisobutylketon, Diisobutylketon, usw.. Das Lösungsmittel kann bereits im Verlauf der radikalischen Polymerisation zugegeben werden.

Vernetzungskatalysatoren für hydrosilylierte Bindemittel in einer Formulierung zum Beispiel mit entsprechenden Polyurethanen sind die gängigen organischen Zinn-, Blei-, Quecksilber- und Wismutkatalysatoren, z. B. Dibutylzinndilaurat (z. B. von BNT Chemicals GmbH), Dibutylzinndiacetat, Dibutylzinndiketonat (z. B. Metatin 740 von Acima/Rohm + Haas), Dibutylzinndimaleat, Zinnnaphthenat, usw. Es können auch Umsetzungsprodukte von organischen Zinnverbindungen, z. B. Dibutylzinndilaurat mit Kieselsäureestern (z. B. DYNASIL A und 40), als Vernetzungskatalysatoren verwendet werden. Daneben auch Titanate (z. B. Tetrabutyltitanat, Tetrapropyltitanat, usw.), Zirkonate (z. B. Tetrabutylzirkonat, usw.), Amine (z. B. Butylamin, Diethanolamin, Octylamin, Morpholin, 1,3-Diazabicyclo[5.4.6]undezen-7 (DBU), usw.) bzw. deren Carbonsäuresalze, niedermolekulare Polyamide, Aminoorganosilane, Sulfonsäurederivate, und deren Mischungen.

Weitere mögliche Anwendungen für die erfindungsgemäßen Bindemittel sind die Herstellung von Schmelzklebstoffen, fließfähigen Klebstoffen, Haftklebstoffen, elastischen Dichtungsmassen, Beschichtungsmitteln oder von Schaumstoffvorläufern.

Ein Vorteil der Blockcopolymere ist die Farblosigkeit sowie die Geruchlosigkeit des hergestellten Produkts.

Ein weiterer Vorteil der vorliegenden Erfindung ist zudem eine beschränkte Zahl von Funktionalitäten in den jeweiligen funktionalisierten Polymerblöcken. Ein höherer Anteil funktioneller Gruppen im Bindemittel führt zu einer eventuellen vorzeitigen Vergelung oder zumindest zu einer zusätzlichen Erhöhung der Lösungs- bzw. Schmelzviskosität. Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die zahlenmittleren bzw. gewichtsmittleren Molekulargewichte Mn bzw. Mw und der Polydispersitätsindex D = Mw/Mn als Maß für die Molekulargewichtsverteilungen werden durch Gelpermeations-Chromatographie (GPC) in Tetrahydrofuran gegenüber einem PMMA-Standard bestimmt.

### Beispiel 1

In einem mit Magnetrührer, Thermometer, Rückflusskühler und Tropftrichter ausgestatteten Schlenkkolben wurden unter N₂-Atmosphäre Monomer 1a (genaue Bezeichnung und Mengenangabe in Tabelle 1), 90 mL Propylacetat, Kupfer(I)oxid (Menge siehe Tabelle 1) und N,N,N',N",N"-Pentamethyldiethylentriamin (PMDETA, Menge siehe Tabelle 1) vorgelegt. Die Lösung wird für 15 min. bei 80 °C gerührt. Anschließend wird bei gleicher Temperatur eine Menge Initiator1 (siehe Tabelle 1) 2-Bromisobuttersäureethylester (EBIB, in 5 mL Propylacetat) zugegeben. Nach einer Reaktionszeit von zwei Stunden wird in die Reaktionslösung eine Menge Initiator2 (siehe Tabelle 1) 2-Bromisobuttersäureethylester (EBIB, in 5 mL Ethylacetat) gegeben. Nach der Polymerisationszeit von zusätzlichen zwei Stunden wird eine Probe zur Bestimmung des mittleren Molgewichts Mₙ (mittels SEC) entnommen und eine Mischung aus Monomer 2a und Monomer 3a (genaue Bezeichnung und Mengenangabe in Tabelle 1) zugegeben. Die Mischung wird weitere 2,5 Stunden bei 80 °C gerührt und anschließend durch Zugabe von 1,5 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Beispiel 2

In einem mit Magnetrührer, Thermometer, Rückflusskühler und Tropftrichter ausgestatteten Schlenkkolben wurden unter N₂-Atmosphäre Monomer 1 a (genaue Bezeichnung und Mengenangabe in Tabelle 1), 90 mL Propylacetat, Kupfer(I)oxid (Menge siehe Tabelle 1) und N,N,N',N",N"-Pentamethyldiethylentriamin (PMDETA, Menge siehe Tabelle 1) vorgelegt. Die Lösung wird für 15 min. bei 80 °C gerührt. Anschließend wird bei gleicher Temperatur eine Menge Initiator1 (siehe Tabelle 1)2-Bromisobuttersäureethylester (EBIB, in 5 mL Propylacetat) zugegeben. Nach einer Reaktionszeit von zwei Stunden wird in die Reaktionslösung eine Menge Initiator2 (siehe Tabelle 1) 2-Bromisobuttersäureethylester (EBIB, in 5 mL Ethylacetat) gegeben und nach einer weiteren Reaktionszeit von zwei Stunden wird eine zusätzliche Menge Initiator3 (siehe Tabelle 1) 2-Bromisobuttersäureethylester (EBIB, in 5 mL Ethylacetat) in die Polymeriastionslösung gegeben. Nach der Polymerisationszeit von zusätzlichen zwei Stunden wird eine Probe zur Bestimmung des mittleren Molgewichts Mₙ (mittels SEC) entnommen und eine Mischung aus Monomer 2a und Monomer 3a (genaue Bezeichnung und Mengenangabe in Tabelle 1) zugegeben. Die Mischung wird weitere 2,5 Stunden bei 80 °C gerührt und anschließend durch Zugabe von 0,8 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Beispiel 3

Analog dem Beispiel 1 werden die Monomere 1 d, 2d und 3d (genaue Bezeichnung und Mengenangabe in Tabelle 1) eingesetzt.

### Beispiel 4

Analog dem Beispiel 1 werden die Monomere 1 e, 2e und 3e (genaue Bezeichnung und Mengenangabe in Tabelle 1) eingesetzt.

**Tabelle 1**

| Beispiel | 1 | 2 | 3 | 4 |
|---|---|---|---|---|
| Monomer 1 | 1a) n-BA | 1b) n-BA | 1d) n-BA | 1e) n-BA |
| Menge | 85 g | 93 g | 85 g | 85 g |
| Kupfer(I)oxid | 0,35 g | 0,18 g | 0,35 g | 0,35 g |
| PMDETA | 0,90 g | 0,43 g | 0,87 g | 0,87 g |
| Initiator1 | 0,3 g | 0,065 g | 0,3 g | 0,3 g |
| Initiator2 | 0,3 g | 0,065 g | 0,3 g | 0,3 g |
| Initiator3 | - | 0,065 g | - | - |
| Monomer 2 | 2a) MMA | 2b) MMA | 2d) n-BA | 2e) n-BA |
| Menge | 10 g | 7,0 g | 10 g | 10 g |
| Monomer 3 | 3a) MEMO | - | 3d) AMA | 3e) HEMA |
| Menge | 5,2 g | - | 5,0 g | 5,1 g |
| Mₙ (1.Stufe) | 26900 | 65000 | 28200 | 29700 |
| D | 2,18 | 2,27 | 1,92 | 1,98 |
| Mₙ (Endprodukt) | 32300 | 69000 | 30600 | 34500 |
| D | 2,12 | 2,18 | 1,83 | 1,89 |

| | | | | |
|---|---|---|---|---|
| MMA = Methylmethacrylat; n-BA = n-Butylacrylat, MEMO = Dynasylan MEMO (3-Methacryloxypropyltrimethoxysilan), AMA = Allylmethacrylat, HEMA = 2-Hydroxyethylmethacrylat | | | | |

Die Molekulargewichtsverteilungen der ersten Polymerisationsstufen sind jeweils bimodal, bzw. im Falle von Beispiel 2 trimodal und weisen einen Molekularitätsindex D größer 1,8 auf. Die Endprodukte haben entsprechend große, wenn auch im Vergleich zu den reinen A-Blöcken kleinere Molekularitätsindizes. Dieser Effekt ergibt sich aus dem insgesamt höheren Molekulargewicht, zeigt jedoch auch, dass die Polymerisation der B-Blöcke kontrolliert abläuft und die Blöcke für sich eine enge Molekulargewichtsverteilung haben. Die Zunahme des Molekularitätsindex in Beispiel 2 auf eine hochmolekulare Schulter zurückzuführen. Diese ergibt sich aus Nebenreaktionen der Silylgruppen unter einer teilweise stattfindenden Kettendimerisierung.

Nach Entfernung des Lösungsmittels können die silyl-funktionalisierten Produkte durch Zugabe geeigneter Trocknungsmittel stabilisiert werden. Auf diese Weise lässt sich eine gute Lagerstabilität ohne weitere Molekulargewichtszunahme gewährleisten.

### Vergleichsbeispiel 1

In einem mit Magnetrührer, Thermometer, Rückflusskühler und Tropftrichter ausgestatteten Schlenkkolben wurden unter N₂-Atmosphäre Monomer 1f (genaue Bezeichnung und Mengenangabe in Tabelle 2), 90 mL Propylacetat, 0,48 g Kupfer(I)oxid und 1,1 g N,N,N',N",N"-Pentamethyldiethylentriamin (PMDETA) vorgelegt. Die Lösung wird für 15 min. bei 80 °C gerührt. Anschließend wird bei gleicher Temperatur in 5 mL Propylacetat gelöster Initiator 2-Bromisobuttersäureethylester (EBIB, in 5 mL Propylacetat; Menge siehe Tabelle2) zugegeben. Nach der Polymerisationszeit von drei Stunden wird eine Probe zur Bestimmung des mittleren Molgewichts Mₙ (mittels SEC) entnommen und eine Mischung aus Monomer 2f und Monomer 3f (genaue Bezeichnung und Mengenangabe in Tabelle 2) zugegeben. Die Mischung wird bis zu einem erwarteten Umsatz von mindestens 95% polymerisiert und durch Zugabe von 1,5 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Vergleichsbeispiel 2

Analog dem Vergleichsbeispiel 1 werden die Monomere 1g, 2g und 3g (genaue Bezeichnung und Mengenangabe in Tabelle 2) eingesetzt.

### Vergleichsbeispiel 3

In einem mit Magnetrührer, Thermometer, Rückflusskühler und Tropftrichter ausgestatteten Schlenkkolben wurden unter N₂-Atmosphäre Monomer 1f (genaue Bezeichnung und Mengenangabe in Tabelle 2), 100 mL Propylacetat, 0,29 g Kupfer(I)oxid und 0,69 g N,N,N',N",N"-Pentamethyldiethylentriamin (PMDETA) vorgelegt. Die Lösung wird für 15 min. bei 80 °C gerührt. Anschließend wird bei gleicher Temperatur in 5 mL Propylacetat gelöster Initiator 2-Bromisobuttersäureethylester (EBIB, in 5 mL Propylacetat; Menge siehe Tabelle2) zugegeben. Nach der Polymerisationszeit von drei Stunden wird eine Probe zur Bestimmung des mittleren Molgewichts Mₙ (mittels SEC) entnommen und eine Mischung aus Monomer 2f und Monomer 3f (genaue Bezeichnung und Mengenangabe in Tabelle 2) zugegeben. Die Mischung wird bis zu einem erwarteten Umsatz von mindestens 95% polymerisiert und durch Zugabe von 1,0 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

**Tabelle 2**

| Vergleichsbeispiel | 1 | 2 | 3 |
|---|---|---|---|
| Monomer 1 | 1f) n-BA | 1g) n-BA | 1h) n-BA |
| Menge | 90 g | 90 g | 93 g |
| Monomer 2 | 2f) MMA | 2g) MMA | 2h) MMA |
| Menge | 5 g | 5 g | 7 g |
| Monomer 3 | 3f) HEMA | 3g) MEMO | - |
| Menge | 5,0 g | 4,8 g | - |
| Initiatormenge | 0,65 g | 0,65 g | 0,39 g |
| Mₙ (1.Stufe) | 25900 | 25700 | 36500 |
| D | 1,42 | 1,31 | 1,31 |
| Mₙ (Endprodukt) | 27800 | 32600 | 39400 |
| D | 1,45 | 1,49 | 1,29 |

Die Vergleichspiele zeigen, dass bei konventioneller Initiatorzugabe in einer Charge Polymere mit relativ eng verteilten Innenblöcken und Molekularitätsindizes kleiner 1,5 gebildet werden.

## Patentansprüche

1. Verfahren zur Herstellung von Blockcopolymeren der Zusammensetzung AB durch eine sequentiell durchgeführte atom transfer radical polymerization (ATRP),
**dadurch gekennzeichnet,**
**dass** ein monofunktioneller Initiator in zwei oder mehr Chargen zur Polymerisationslösung zugegeben wird, und dass das Blockcopolymer der Zusammensetzung AB insgesamt eine Molekulargewichtsverteilung mit einem Polydispersitätsindex größer 1,8 aufweist.

2. Verfahren zur Herstellung von Blockcopolymeren gemäß Anspruch 1, **dadurch gekennzeichnet, dass** es sich bei Block A, um ein Copolymer mit einer bimodalen Molekulargewichtsverteilung mit einem Polydispersitätsindex größer 1,8 handelt, enthaltend (Meth)acrylate oder deren Mischungen, dass es sich bei Block B, um ein Copolymer mit einer monomodalen Molkulargewichtsverteilung mit einem Polydispersitätsindex kleiner 1,6 handelt enthaltend Monomere ausgewählt aus der Gruppe der (Meth)acrylate oder deren Mischungen, und dass das Blockcopolymer der Zusammensetzung AB insgesamt einen Polydispersitätsindex größer 1,8 aufweist.

3. Verfahren zur Herstellung von Blockcopolymeren gemäß einem der Ansprüche 1 oder 2, **dadurch gekennzeichnet, dass** der Initiator in zwei Chargen zeitlich voneinander getrennt zugegeben wird, und dass die erste Initiatorcharge 10% bis 90% der gesamten Initiatormenge ausmacht.

4. Verfahren zur Herstellung von Blockcopolymeren gemäß Anspruch 3, **dadurch gekennzeichnet, dass** die zweite Initiatorcharge mindestens 30 min nach der ersten Initiatorcharge und mindestens 60 min vor der Zugabe der Monomermischung B zur Polymerisationslösung gegeben wird.

5. Verfahren zur Herstellung von Blockcopolymeren gemäß Anspruch 4, **dadurch gekennzeichnet, dass** die zweite Initiatorcharge mindestens 60 min nach der ersten Initiatorcharge und mindestens 90 min vor der Zugabe der Monomermischung B zur Polymerisationslösung gegeben wird.

6. Verfahren zur Herstellung von Blockcopolymeren gemäß einem der Ansprüche 1 bis 5, **dadurch gekennzeichnet, dass** der A-Block oder der B-Block der Blockcopolymere eine Zusammensetzung mit mindestens 1 und maximal 4 funktionellen Gruppen aufweist.

7. Verfahren zur Herstellung von Blockcopolymeren gemäß Anspruch 6, **dadurch gekennzeichnet, dass** der A-Block oder der B-Block der Blockcopolymere eine Zusammensetzung mit mindestens 1 und maximal 2 funktionellen Gruppen aufweist.

8. Verfahren zur Herstellung von Blockcopolymeren gemäß einem der Ansprüche 1 bis 7, **dadurch gekennzeichnet, dass** der A-Block und der B-Block der Blockcopolymere jeweils eine Zusammensetzung mit mindestens 1 und maximal 4 funktionellen Gruppen aufweisen, und dass die funktionellen Gruppen in Block A und die funktionellen Gruppen in Block B identisch oder unterschiedlich sein können.

9. Verfahren zur Herstellung von Blockcopolymeren gemäß mindestens einem der Ansprüche 6 bis 8, **dadurch gekennzeichnet, dass** in die A- und/oder B-Blöcke Monomere, die eine ungesättigte, radikalisch polymerisierbare Gruppe und eine zweite funktionelle Gruppe, ausgewählt aus Hydroxy-, Amin-, Allyl-, Silyl-, oder Epoxygruppen aufweisen, einpolymerisiert werden.

10. Verfahren zur Herstellung von Blockcopolymeren gemäß einem der Ansprüche 1 bis 9, **dadurch gekennzeichnet, dass** einer oder beide Blöcke zusätzlich Vinylester, Vinylether, Fumarate, Maleate, Styrole, Acrylonitrile oder andere mittels ATRP polymerisierbare Monomere enthalten.

11. Verfahren zur Herstellung von Blockcopolymeren gemäß einem der Ansprüche 1 bis 10, **dadurch gekennzeichnet, dass** das Blockcopolymer ein zahlenmittleres Molekulargewicht zwischen 5000 g/mol und 100000 g/mol aufweist.

12. Verfahren zur Herstellung von Blockcopolymeren gemäß einem der Ansprüche 1 bis 11, **dadurch gekennzeichnet, dass** der ATRP-Katalysator nach der Polymerisation mittels Zugabe eines Mercaptans oder einer eine Thiolgruppe aufweisende Verbindung gefällt und mittels Filtration von der Polymerlösung abgetrennt wird.

13. AB-Diblockcopolymer enthaltend Block B mit einer monomodalen Molkulargewichtsverteilung mit einem Polydispersitätsindex kleiner 1,6, sowie Block A mit einer bimodalen Molekulargewichtsverteilung mit einem Polydispersitätsindex größer 1,8, wobei die Monomere ausgewählt werden aus (Meth)acrylaten oder deren Mischungen, erhältlich durch ein Verfahren nach einem der Ansprüche 2 bis 12.

14. Verwendung eines Polymeren gemäß Anspruch 13 zur Herstellung von Schmelzklebstoffen, fließfähigen Klebstoffen, Haftklebstoffen, elastischen Dichtungsmassen, Beschichtungsmitteln, Heißsiegelmassen oder von Schaumstoffvorläufern.

15. Verwendung von Blockcopolymeren gemäß Anspruch 13 in vernetzbaren Zusammensetzungen, wobei das Blockcopolymer reaktive funktionelle Gruppen aufweist.

## Claims

1. Process for preparing block copolymers of composition AB by a sequentially implemented atom transfer radical polymerization (ATRP),
**characterized**
**in that** a monofunctional initiator is added to the polymerization solution in two or more batches, and in that the block copolymer of the composition AB has an overall molecular weight distribution with a polydispersity index of greater than 1.8.

2. Process for preparing block copolymers according to Claim 1, **characterized in that** block A is a copolymer having a bimodal molecular weight distribution with a polydispersity index of greater than 1.8 comprising (meth)acrylates or mixtures thereof, **in that** block B is a copolymer having a monomodal molecular weight distribution with a polydispersity index of less than 1.6 comprising monomers selected from the group consisting of (meth)acrylates and mixtures thereof, and **in that** the block copolymer of the composition AB has an overall polydispersity index of greater than 1.8.

3. Process for preparing block copolymers according to either of Claims 1 and 2, **characterized in that** the initiator is added in two batches at different times from each other, and **in that** the first initiator batch accounts for 10% to 90% of the overall amount of initiator.

4. Process for preparing block copolymers according to Claim 3, **characterized in that** the second initiator batch is added at least 30 minutes after the first initiator batch and at least 60 minutes before the addition of the monomer mixture B to the polymerization solution.

5. Process for preparing block copolymers according to Claim 4, **characterized in that** the second initiator batch is added at least 60 minutes after the first initiator batch and at least 90 minutes before the addition of the monomer mixture B to the polymerization solution.

6. Process for preparing block copolymers according to any of Claims 1 to 5, **characterized in that** the A block or the B block of the block copolymers has a composition with at least 1 and not more than 4 functional groups.

7. Process for preparing block copolymers according to Claim 6,**characterized in that** the A block or the B block of the block copolymers has a composition with at least one and not more than 2 functional groups.

8. Process for preparing block copolymers according to any of Claims 1 to 7, **characterized in that** the A block and the B block of the block copolymers each have a composition with at least 1 and not more than 4 functional groups, and **in that** the functional groups in block A and the functional groups in block B may be identical or different.

9. Process for preparing block copolymers according to at least one of Claims 6 to 8, **characterized in that** monomers which have an unsaturated, free-radically polymerizable group and a second functional group selected from hydroxyl, amine, allyl, silyl or epoxy groups are copolymerized into the A and/or B blocks.

10. Process for preparing block copolymers according to any of Claims 1 to 9, **characterized in that** one or both blocks additionally comprise vinyl esters, vinyl ethers, fumarates, maleates, styrenes, acrylonitriles or other monomers which are polymerizable by means of ATRP.

11. Process for preparing block copolymers according to any of Claims 1 to 10, **characterized in that** the block copolymer has a number-average molecular weight of between 5000 g/mol and 100 000 g/mol.

12. Process for preparing block copolymers according to any of Claims 1 to 11, **characterized in that**, after the polymerization, the ATRP catalyst is precipitated by means of addition of a mercaptan or of a compound having a thiol group and is removed from the polymer solution by means of filtration.

13. AB diblock copolymer comprising block B, having a monomodal molecular weight distribution with a polydispersity index of less than 1.6, and block A, having a bimodal molecular weight distribution with a polydispersity index of greater than 1.8, the monomers being selected from (meth)acrylates or mixtures thereof, obtainable by a process according to any of Claims 2 to 12.

14. Use of a polymer according to Claim 13 for producing hotmelt adhesives, fluid adhesives, pressure-sensitive adhesives, elastic sealants, coating materials, heat-sealing compositions or foam precursors.

15. Use of block copolymers according to Claim 13 in crosslinkable compositions, the block copolymer having reactive functional groups.

## Revendications

1. Procédé pour la préparation de copolymères séquencés de composition AB, par une polymérisation radicalaire par transfert d'atomes (ATRP) effectuée séquentiellement,
**caractérisé en ce**
**qu'**on ajoute un amorceur monofonctionnel en deux ou plus de deux charges à la solution de polymérisation, et en ce que le copolymère séquencé de composition AB présente dans son ensemble une distribution de masse moléculaire avec un indice de polydispersité supérieur à 1,8.

2. Procédé pour la préparation de copolymères séquencés selon la revendication 1, **caractérisé en ce que** la séquence A consiste en un copolymère ayant une distribution bimodale de masse moléculaire avec un indice de polydispersité supérieur à 1,8, contenant des (méth)acrylates ou leurs mélanges, **en ce que** la séquence B consiste en un copolymère ayant une distribution monomodale de masse moléculaire avec un indice de polydispersité inférieur à 1,6, contenant des monomères choisis dans le groupe des (méth)acrylates ou leurs mélanges, et **en ce que** le copolymère séquencé de composition AB présente dans son ensemble un indice de polydispersité supérieur à 1,8.

3. Procédé pour la préparation de copolymères séquencés selon la revendication 1 ou 2, **caractérisé en ce qu'**on ajoute l'amorceur en deux charges séparées l'une de l'autre dans le temps, et **en ce que** la première charge d'amorceur représente 10 % à 90 % de la quantité totale de l'amorceur.

4. Procédé pour la préparation de copolymères séquencés selon la revendication 3, **caractérisé en ce qu'**on ajoute la deuxième charge d'amorceur au moins 30 minutes après la première charge d'amorceur et au moins 60 minutes avant l'addition du mélange de monomères B à la solution de polymérisation.

5. Procédé pour la préparation de copolymères séquencés selon la revendication 4, **caractérisé en ce qu'**on ajoute la deuxième charge d'amorceur au moins 60 minutes après la première charge d'amorceur et au moins 90 minutes avant l'addition du mélange de monomères B à la solution de polymérisation.

6. Procédé pour la préparation de copolymères séquencés selon l'une quelconque des revendications 1 à 5, **caractérisé en ce que** la séquence A ou la séquence B des copolymères séquencés présente une composition comportant au moins 1 et au maximum 4 groupes fonctionnels.

7. Procédé pour la préparation de copolymères séquencés selon la revendication 6, **caractérisé en ce que** la séquence A ou la séquence B des copolymères séquencés présente une composition comportant au moins 1 et au maximum 2 groupes fonctionnels.

8. Procédé pour la préparation de copolymères séquencés selon l'une quelconque des revendications 1 à 7, **caractérisé en ce que** la séquence A et la séquence B des copolymères séquencés présentent chacune une composition comportant au moins 1 et au maximum 4 groupes fonctionnels, et **en ce que** les groupes fonctionnels dans la séquence A et les groupes fonctionnels dans la séquence B peuvent être identiques ou différents.

9. Procédé pour la préparation de copolymères séquencés selon au moins l'une quelconque des revendications 6 à 8, **caractérisé en ce que** dans les séquences A et/ou B sont incorporés par polymérisation des monomères qui comportent un groupe insaturé, apte à la polymérisation radicalaire, et un deuxième groupe fonctionnel, choisi parmi les groupes hydroxy, amino, allyle, silyle ou époxy.

10. Procédé pour la préparation de copolymères séquencés selon l'une quelconque des revendications 1 à 9, **caractérisé en ce qu'**une séquence ou les deux séquences contiennent en outre des esters vinyliques, éthers vinyliques, fumarates, maléates, styrènes, acrylonitriles ou d'autres monomères polymérisables par ATRP.

11. Procédé pour la préparation de copolymères séquencés selon l'une quelconque des revendications 1 à 10, **caractérisé en ce que** le copolymère séquencé présente une masse moléculaire moyenne en nombre comprise entre 5 000 g/mole et 100 000 g/mole.

12. Procédé pour la préparation de copolymères séquencés selon l'une quelconque des revendications 1 à 11, **caractérisé en ce qu'**après la polymérisation on fait précipiter le catalyseur d'ATRP par addition d'un mercaptan ou d'un composé comportant un groupe thiol et on le sépare par filtration de la solution de polymérisation.

13. Copolymère biséquencé AB contenant une séquence B ayant une distribution monomodale de masse moléculaire avec un indice de polydispersité inférieur à 1,6, ainsi qu'une séquence A ayant une distribution bimodale de masse moléculaire avec un indice de polydispersité supérieur à 1,8, les monomères étant choisis parmi des (méth)acrylates ou leurs mélanges, pouvant être obtenu par un procédé selon l'une quelconque des revendications 2 à 12.

14. Utilisation d'un polymère selon la revendication 13, pour la production d'adhésifs thermofusibles, d'adhésifs fluides, d'autoadhésifs, de matières d'étanchéité élastiques, de compositions de revêtement, de matières pour thermoscellage ou de précurseurs de mousses.

15. Utilisation de copolymères séquencés selon la revendication 13 dans des compositions réticulables, le copolymère séquencé comportant des groupes fonctionnels réactifs.
